# EUROPEAN PATENT APPLICATION

(11) **EP 4 572 326 A1**
(43) Date of publication of application: **18.06.2025**
(21) Application number: 23899555.9
(22) Date of filing: 22.09.2023
(51) Int. Cl.: H04Q 11/00

(54) **OPTICAL SPLITTER, SECONDARY GATEWAY, DETECTION METHOD, AND OPTICAL COMMUNICATION SYSTEM**

(30) Priority: 06.12.2022 CN 202211578603
(71) Applicant: Huawei Technologies Co., Ltd., Shenzhen, Guangdong 518129 (CN)
(72) Inventor: LI, Borui, Shenzhen, Guangdong 518129 (CN); HUANG, Guojia, Shenzhen, Guangdong 518129 (CN); ZHENG, Zongzhao, Shenzhen, Guangdong 518129 (CN)
(74) Representative: Isarpatent
(86) International application number: PCT/CN2023/120702
(87) International publication number: WO 2024/119972

(57) **Abstract**

This application provides an optical splitter, applied to the optical communication field. The optical splitter includes an optical splitting unit, a control unit, and a photoelectric composite unit. The optical splitting unit is configured to receive a downlink optical signal from a main gateway, and transmit N downlink optical sub-signals to the photoelectric composite unit. The control unit is configured to transmit N first electrical signals with different frequencies to the photoelectric composite unit. The photoelectric composite unit includes N ports. The N ports are configured to connect to N sub gateways through photoelectric composite cables respectively. The photoelectric composite unit is configured to output the N downlink optical sub-signals through the N ports respectively, and output the N first electrical signals with the different frequencies through the N ports respectively. In this application, operation and maintenance information may be transmitted to the sub gateway by using the first electrical signal, to improve network operation and maintenance efficiency.

## Description

This application claims priority to Chinese Patent Application No. CN202211578603.0, filed with the China National Intellectual Property Administration on December 6, 2022 and entitled "OPTICAL SPLITTER, SUB GATEWAY, DETECTION METHOD, AND OPTICAL COMMUNICATION SYSTEM", which is incorporated herein by reference in its entirety.

### TECHNICAL FIELD

This application relates to the field of optical communication, and in particular, to an optical splitter, a sub gateway, a detection method, and an optical communication system.

### BACKGROUND

A passive optical network (passive optical network, PON) system includes an optical line terminal (optical line terminal, OLT), an optical distribution network (optical distribution network, ODN), and a plurality of optical network units (optical network units, ONUs). The ODN includes an optical splitter. The optical splitter includes a plurality of output ports. Each output port is connected to one ONU. In an uplink direction, an uplink optical signal from each ONU is converged to the OLT through the optical splitter in a time division manner. In a downlink direction, the OLT distributes a downlink optical signal to all of the ONUs through the optical splitter. Each ONU receives the same downlink optical signal.

During actual application, how to improve operation and maintenance efficiency of the PON system is an urgent problem to be resolved.

### SUMMARY

This application provides an optical splitter, a sub gateway, a detection method, and an optical communication system, to transmit operation and maintenance information to the sub gateway by using a first electrical signal, so as to improve network operation and maintenance efficiency.

A first aspect of this application provides an optical splitter. The optical splitter includes an optical splitting unit, a control unit, and a photoelectric composite unit. The optical splitting unit is configured to receive a downlink optical signal from a main gateway, and transmit N downlink optical sub-signals to the photoelectric composite unit. N is an integer greater than 0. The control unit is configured to transmit N first electrical signals with different frequencies to the photoelectric composite unit. The photoelectric composite unit includes N ports. The N ports are configured to connect to N sub gateways through photoelectric composite cables respectively. The N sub gateways are in one-to-one correspondence with the N ports. The photoelectric composite unit is configured to output the N downlink optical sub-signals through the N ports respectively, and output the N first electrical signals through the N ports respectively. The N ports are in one-to-one correspondence with the N downlink optical sub-signals. The N ports are in one-to-one correspondence with the N first electrical signals.

In an optional manner of the first aspect, the N first electrical signals with the different frequencies are used to obtain a first correspondence between the N ports and the N sub gateways. Obtaining the correspondence by using the N first electrical signals with the different frequencies can reduce operation and maintenance costs of an optical communication system. In an optional manner of the first aspect, the control unit includes N filter units and a controller. The control unit is configured to transmit N electrical signals to the N filter units. The N electrical signals are in one-to-one correspondence with the N filter units. The N filter units are configured to filter the N electrical signals to obtain the N first electrical signals with the different frequencies. During actual application, the controller may directly generate the N first electrical signals with the different frequencies. In this case, a requirement for an internal memory of the controller is high, resulting in high costs of the optical splitter. Therefore, this application can reduce costs of the optical splitter.

In an optional manner of the first aspect, the N first electrical signals carry cascading identifiers. The cascading identifiers are used to determine a topology level of the N sub gateways. Determining the topology level of the N sub gateways by using the cascading identifiers can improve operation, administration and maintenance (operation, administration and maintenance, OAM) performance of the optical communication system.

In an optional manner of the first aspect, the cascading identifiers are frequencies of the N first electrical signals. During actual application, the cascading identifiers may alternatively be powers of the N first electrical signals. In this case, the sub gateway needs to measure both the frequencies of the N first electrical signals and the powers of the N first electrical signals. Consequently, a structure of the sub gateway is complex. Therefore, this application can reduce structure complexity of the sub gateway, to reduce costs of the sub gateway.

In an optional manner of the first aspect, the optical splitter further includes a range control unit. The range control unit is configured to transmit a range control signal to the control unit. The control unit is configured to transmit, to the photoelectric composite unit based on the range control signal, the N first electrical signals whose cascading identifiers include the frequencies. The range control unit is added, so that the range control signal may be adjusted based on a topology level of the optical splitter. Therefore, device installation personnel may install the optical splitter at any topology level, to reduce installation costs.

In an optional manner of the first aspect, the optical splitter further includes an amplifier unit and/or a shaping unit. The amplifier unit is configured to amplify the N first electrical signals. The shaping unit is configured to shape the N first electrical signals. Accuracy of the frequencies of the N first electrical signals determined by the sub gateway can be improved by using the amplifier unit and/or the shaping unit, to improve communication reliability.

In an optional manner of the first aspect, the N first electrical signals are obtained based on a δ-Σ modulation (delta-sigma modulation, DSM) sequence. Accuracy of the detected frequency can be improved by using the DSM sequence, to improve operation and maintenance efficiency.

A second aspect of this application provides a sub gateway. The sub gateway includes an input port and a control unit. The input port is configured to receive a first electrical signal from one of N ports of an optical splitter, and transmit the first electrical signal to the control unit. N is an integer greater than 0. The control unit is configured to determine a frequency of the first electrical signal. The frequency of the first electrical signal is used to obtain a sub-correspondence. The sub-correspondence represents that the input port is connected to a first port of the optical splitter.

In an optional manner of the second aspect, an oscillator is configured to generate an oscillatory electrical signal, and transmit the oscillatory electrical signal to the control unit. The control unit is configured to determine the frequency of the first electrical signal based on the oscillatory electrical signal.

In an optional manner of the second aspect, the control unit is further configured to obtain the sub-correspondence based on the frequency of the first electrical signal and a second correspondence. The second correspondence includes a mapping relationship between N frequencies and the N ports. During actual application, the sub gateway may transmit the frequency of the first electrical signal and an identifier of the sub gateway to another device. The another device obtains the sub-correspondence based on the second correspondence, the frequency of the first electrical signal, and the identifier of the sub gateway. In this application, the sub gateway may directly obtain the sub-correspondence based on the second correspondence, to improve efficiency of obtaining the sub-correspondence.

In an optional manner of the second aspect, the first electrical signal carries a cascading identifier. The cascading identifier is used to determine a topology level of the sub gateway.

In an optional manner of the second aspect, the cascading identifier is the frequency of the first electrical signal.

A third aspect of this application provides a detection method. The detection method includes the following steps: An optical splitter generates N first electrical signals with different frequencies. N is an integer greater than 0. The optical splitter transmits the N first electrical signals to N sub gateways through N ports respectively. The N ports are in one-to-one correspondence with the N sub gateways. The N first electrical signals are in one-to-one correspondence with the N sub gateways.

In an optional manner of the third aspect, the N first electrical signals with the different frequencies are used to obtain a first correspondence between the N ports and the N sub gateways.

In an optional manner of the third aspect, the N first electrical signals carry cascading identifiers. The cascading identifiers are used to determine a topology level of the N sub gateways.

In an optional manner of the third aspect, the detection method further includes the following steps: The optical splitter receives a range control signal. The optical splitter generates, based on the range control signal, the N first electrical signals whose frequencies include the cascading identifiers.

In an optional manner of the third aspect, the detection method further includes the following steps: The optical splitter amplifies the N first electrical signals; and/or the optical splitter shapes the N first electrical signals.

A fourth aspect of this application provides a detection method. The detection method includes the following steps: A sub gateway receives a first electrical signal from one of N ports of an optical splitter. N is an integer greater than 0. The sub gateway determines a frequency of the first electrical signal. The frequency of the first electrical signal is used to obtain a sub-correspondence. The sub-correspondence represents that an input port is connected to a first port of the optical splitter.

In an optional manner of the fourth aspect, the detection method further includes the following steps: The sub gateway generates an oscillatory electrical signal. The sub gateway determines the frequency of the first electrical signal based on the oscillatory electrical signal.

In an optional manner of the fourth aspect, the detection method further includes the following step: The sub gateway obtains the sub-correspondence based on the frequency of the first electrical signal and a second correspondence. The second correspondence includes a mapping relationship between N frequencies and the N ports.

In an optional manner of the fourth aspect, the detection method further includes the following step: The sub gateway determines a topology level of the sub gateway based on the frequency of the first electrical signal.

A fifth aspect of this application provides an optical communication system. The optical communication system includes a main gateway, an optical splitter, and N sub gateways. N is an integer greater than 0. The main gateway is connected to the optical splitter through an optical fiber. The optical splitter includes N ports. The N ports are connected to the N sub gateways through photoelectric composite cables. The N ports are in one-to-one correspondence with the N sub gateways. The optical splitter is configured to transmit N first electrical signals with different frequencies to the N sub gateways through the N ports respectively. The N first electrical signals are in one-to-one correspondence with the N sub gateways.

In an optional manner of the fifth aspect, the N first electrical signals with the different frequencies are used to obtain a first correspondence between the N ports and the N sub gateways.

In an optional manner of the fifth aspect, the N first electrical signals carry cascading identifiers. The cascading identifiers are used to determine a topology level of the N sub gateways.

In an optional manner of the fifth aspect, the cascading identifiers are frequencies of the N first electrical signals.

In an optional manner of the fifth aspect, the optical splitter is further configured to receive a range control signal. The optical splitter is configured to transmit, to the N sub gateways based on the range control signal, the N first electrical signals whose frequencies include the cascading identifiers.

A sixth aspect of this application provides a computer storage medium. The computer storage medium stores instructions, and when the instructions are executed on a computer, the computer is enabled to perform the method according to any one of the third aspect or the implementations of the third aspect, or the computer is enabled to perform the method according to any one of the fourth aspect or the implementations of the fourth aspect.

A seventh aspect of this application provides a computer program product. When the computer program product is executed on a computer, the computer is enabled to perform the method according to any one of the third aspect or the implementations of the third aspect, or the computer is enabled to perform the method according to any one of the fourth aspect or the implementations of the fourth aspect.

### BRIEF DESCRIPTION OF DRAWINGS

FIG. 1 is a first schematic structural diagram of an optical communication system according to an embodiment of this application;
FIG. 2 is a second schematic structural diagram of an optical communication system according to an embodiment of this application;
FIG. 3 is a third schematic structural diagram of an optical communication system according to an embodiment of this application;
FIG. 4 is a first schematic structural diagram of an optical splitter according to an embodiment of this application;
FIG. 5 is a second schematic structural diagram of an optical splitter according to an embodiment of this application;
FIG. 6 is a third schematic structural diagram of an optical splitter according to an embodiment of this application;
FIG. 7 is a schematic structural diagram of a control unit according to an embodiment of this application;
FIG. 8 is a fourth schematic structural diagram of an optical splitter according to an embodiment of this application;
FIG. 9 is a first schematic structural diagram of a sub gateway according to an embodiment of this application;
FIG. 10 is a second schematic structural diagram of a sub gateway according to an embodiment of this application;
FIG. 11 is a third schematic structural diagram of a sub gateway according to an embodiment of this application;
FIG. 12 is a first schematic structural diagram of a detection method according to an embodiment of this application; and
FIG. 13 is a second schematic structural diagram of a detection method according to an embodiment of this application.

### DESCRIPTION OF EMBODIMENTS

This application provides an optical splitter, a sub gateway, a detection method, and an optical communication system, to transmit operation and maintenance information to the sub gateway by using a first electrical signal, so as to improve network operation and maintenance efficiency. It should be understood that "first", "second", and the like used in this application are merely used for a purpose of distinguishing for description, and shall not be understood as an indication or implication of relative importance or an indication or implication of an order. In addition, for brevity and clarity, reference numerals and/or letters are repeated in a plurality of accompanying drawings of this application. Repetition does not indicate that there is a strict restrictive relationship between various embodiments and/or configurations.

In a passive optical network (passive optical network, PON) system, an optical distribution network (optical distribution network, ODN) includes a plurality of output ports. The plurality of output ports are in one-to-one correspondence with a plurality of optical network units (optical network units, ONUs). To facilitate network maintenance, the correspondence between the plurality of ONUs and the plurality of output ports may be obtained through an optical filter in the ODN. However, an additional tunable narrow linewidth laser needs to be introduced into the PON system to generate detection light, and detect reflected light by using a detection apparatus, resulting in high operation and maintenance costs of the PON system.

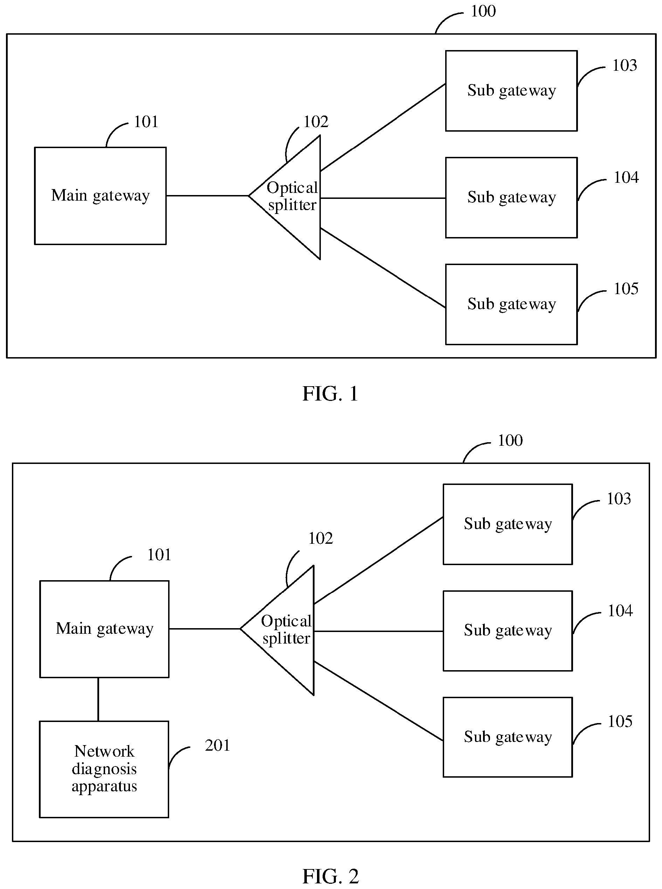

In view of this, this application provides an optical communication system. FIG. 1 is a first schematic structural diagram of an optical communication system according to an embodiment of this application. As shown in FIG. 1, the optical communication system 100 includes a main gateway 101, an optical splitter 102, and N sub gateways. N is an integer greater than 0. In an example of FIG. 1, N is equal to 3. The N sub gateways include sub gateways 103 to 105. The main gateway may also be referred to as a main gateway device. The main gateway 101 may be an optical line terminal (optical line terminal, OLT). The main gateway 101 is connected to the optical splitter 102 through an optical fiber. The sub gateway may also be referred to as a sub gateway device. The sub gateway may be an ONU, an optical network terminal (optical network terminal, ONT), an access point (access point, AP), or the like. The optical splitter 102 includes N ports. Each port is connected to one sub gateway through one or more photoelectric composite cables. For ease of description, an example in which each port is connected to one sub gateway through one photoelectric composite cable is used for description subsequently. The N ports are in one-to-one correspondence with the N sub gateways. The N ports are in one-to-one correspondence with N photoelectric composite cables.

The optical splitter 102 may be configured to transmit both an uplink optical signal and a downlink optical signal. In a downlink direction, the main gateway 101 transmits a downlink optical signal to the optical splitter 102. The optical splitter 102 obtains N downlink optical sub-signals based on the downlink optical signal. For example, the optical splitter 102 splits the downlink optical signal to obtain the N downlink optical sub-signals. For another example, the optical splitter 102 splits the downlink optical signal to obtain N+1 downlink optical sub-signals. The optical splitter 102 further includes a cascading port. The cascading port is connected to another optical splitter. Alternatively, the optical splitter 102 further includes a port that is not connected to the sub gateway. The N downlink optical sub-signals are N optical sub-signals in the N+1 downlink optical sub-signals. The optical splitter 102 outputs the N downlink optical sub-signals through the N ports. Each port is configured to output one downlink optical sub-signal. Each sub gateway is configured to receive one downlink optical sub-signal. The N downlink optical sub-signals are in one-to-one correspondence with the N sub gateways. In an uplink direction, an uplink optical sub-signal from each sub gateway is coupled to the main gateway 101 through the optical splitter 102 in a time division manner.

The optical splitter 102 may be further configured to transmit N first electrical signals with different frequencies. Specifically, the optical splitter 102 is configured to generate the N first electrical signals with the different frequencies. For example, the N first electrical signals include an electrical signal 1 and an electrical signal 2. A frequency range of the electrical signal 1 is from 0 thousand hertz (thousand hertz, kHz) to 400 thousand hertz. A frequency range of the electrical signal 2 is from 0 kHz to 800 kHz. The optical splitter 102 outputs the N first electrical signals through the N ports. Each port is configured to output one first electrical signal. Each sub gateway is configured to receive one first electrical signal. The N first electrical signals are in one-to-one correspondence with the N sub gateways. The N first electrical signals are used to transmit operation and maintenance information to the N sub gateways. The operation and maintenance information may be used to obtain a first correspondence between the N ports and the N sub gateways. For example, Table 1 is an example of the first correspondence provided in this embodiment of this application. A port 1 corresponds to the sub gateway 103, representing that the sub gateway 103 is connected to the port 1 of the optical splitter 102.

**Table 1**

| Identifier of a port | Identifier of a sub gateway |
|---|---|
| Port 1 | Sub gateway 103 |
| Port 2 | Sub gateway 104 |
| Port 3 | Sub gateway 105 |

In this embodiment of this application, the optical splitter 102 may transmit the operation and maintenance information to the sub gateways by using the N first electrical signals with the different frequencies. Therefore, in this embodiment of this application, network operation and maintenance efficiency can be improved. It can be learned from the foregoing descriptions of FIG. 1 that, the N first electrical signals with the different frequencies are used to obtain the first correspondence between the N ports and the N sub gateways. During actual application, the N sub gateways and/or another device may obtain the first correspondence based on the N first electrical signals. The another device may be the optical splitter 102 or the main gateway 101. Descriptions are separately provided below.

In a first implementation, the N sub gateways are configured to obtain the first correspondence based on the N first electrical signals. For ease of description, the sub gateway 104 in the N sub gateways is used as an example for description. The sub gateway 104 is configured to receive the first electrical signal from the optical splitter 102. The sub gateway 104 is further configured to measure a frequency of the first electrical signal. For example, the sub gateway 104 is configured to generate oscillatory electrical signals with different frequencies, and perform correlation operations based on the oscillatory electrical signals with the different frequencies and the first electrical signal. When an operation result obtained by using an oscillatory electrical signal with a frequency 1 exceeds a threshold, the sub gateway 104 determines that the frequency of the first electrical signal is the frequency 1. The frequency of the first electrical signal may be a center frequency, an upper frequency limit, or a lower frequency limit of the first electrical signal. The sub gateway 104 is further configured to obtain a second correspondence. The second correspondence includes a mapping relationship between N frequencies and the N ports. For example, Table 2 is an example of the second correspondence provided in this embodiment of this application.

**Table 2**

| Identifier of a port | Frequency of a first electrical signal |
|---|---|
| Port 1 | Frequency 1 |
| Port 2 | Frequency 2 |
| Port 3 | Frequency 3 |

The sub gateway 104 is configured to obtain a sub-correspondence based on the second correspondence and the frequency of the first electrical signal. For example, the frequency of the first electrical signal is a frequency 2. In this case, the sub gateway 104 may determine that the sub gateway 104 is connected to a port 2 of the optical splitter 102. The sub gateway 104 is configured to establish a correspondence between an identifier of the port 2 and an identifier of the sub gateway 104, to obtain the sub-correspondence. Similarly, another sub gateway may also obtain the sub-correspondence according to the foregoing method. N sub-correspondences are the first correspondence.

After obtaining the sub-correspondence, the sub gateway 104 may transmit the sub-correspondence to the another device. Similarly, the another sub gateway may also transmit the sub-correspondence to the another device. Therefore, the another device may combine the N sub-correspondences to obtain the first correspondence. Bases on a type of the another device, the sub gateway 104 may transmit the sub-correspondence to the another device in different manners. Descriptions are separately provided below.

When the another device is the optical splitter 102, the sub gateway 104 may transmit the sub-correspondence to the optical splitter 102 by using an electrical signal or a radio signal. The sub gateway 104 is connected to the optical splitter 102 through a photoelectric composite cable. Therefore, the sub gateway 104 may transmit a second electrical signal to the optical splitter 102 through the photoelectric composite cable. The second electrical signal carries the sub-correspondence. Alternatively, a wireless module is disposed in each of the sub gateway 104 and the optical splitter 102. The sub gateway 104 transmits the radio signal to the optical splitter 102 through the wireless module. The radio signal carries the sub-correspondence.

When the another device is the main gateway 101, the sub gateway 104 may transmit the sub-correspondence to the main gateway 101 by using an optical signal, a radio signal, or an electrical signal. The main gateway 101 is connected to the sub gateway 104 through an optical fiber. The sub gateway 104 may transmit an uplink optical sub-signal to the main gateway 101 through the optical fiber. The uplink optical sub-signal carries the sub-correspondence. Alternatively, a wireless module is disposed in each of the sub gateway 104 and the main gateway 101. The sub gateway 104 transmits the radio signal to the main gateway 101 through the wireless module. The radio signal carries the sub-correspondence. Alternatively, the optical fiber between the main gateway 101 and the optical splitter 102 may be a photoelectric composite cable. In this case, the main gateway 101 may also be configured to transmit the electrical signal to the sub gateway 104 through the optical splitter 102. The electrical signal carries the sub-correspondence.

In a second implementation, the another device may obtain the first correspondence based on the N first electrical signals. The another device receives a correspondence between a frequency of the first electrical signal and an identifier of the sub gateway 104 from the sub gateway 104. For descriptions of the manner in which the another device receives the foregoing correspondence, refer to the foregoing descriptions of receiving the sub-correspondence from the sub gateway 104 by the another device. For example, when the another device is the optical splitter 102, the another device receives the correspondence between the frequency of the first electrical signal and the identifier of the sub gateway 104 by using a second electrical signal. The another device may obtain a second correspondence. For descriptions of the second correspondence, refer to the foregoing descriptions of Table 2. The another device obtains the sub-correspondence based on the second correspondence, the frequency of the first electrical signal, and the identifier of the sub gateway 104. The another device may obtain N sub-correspondences (that is, the first correspondence) according to a similar method. The N sub-correspondences are in one-to-one correspondence with the N sub gateways.

To improve operation and maintenance efficiency, the optical communication system 100 may further include a network diagnosis apparatus. The network diagnosis apparatus may be a network management device or a mobile terminal. The network diagnosis apparatus is configured to obtain the first correspondence from the another device or the N sub gateways, and display the first correspondence. FIG. 2 is a second schematic structural diagram of an optical communication system according to an embodiment of this application. As shown in FIG. 2, based on FIG. 1, the optical communication system 100 further includes a network diagnosis apparatus 201. The network diagnosis apparatus 201 is configured to obtain the first correspondence from the main gateway 101, and display the first correspondence.

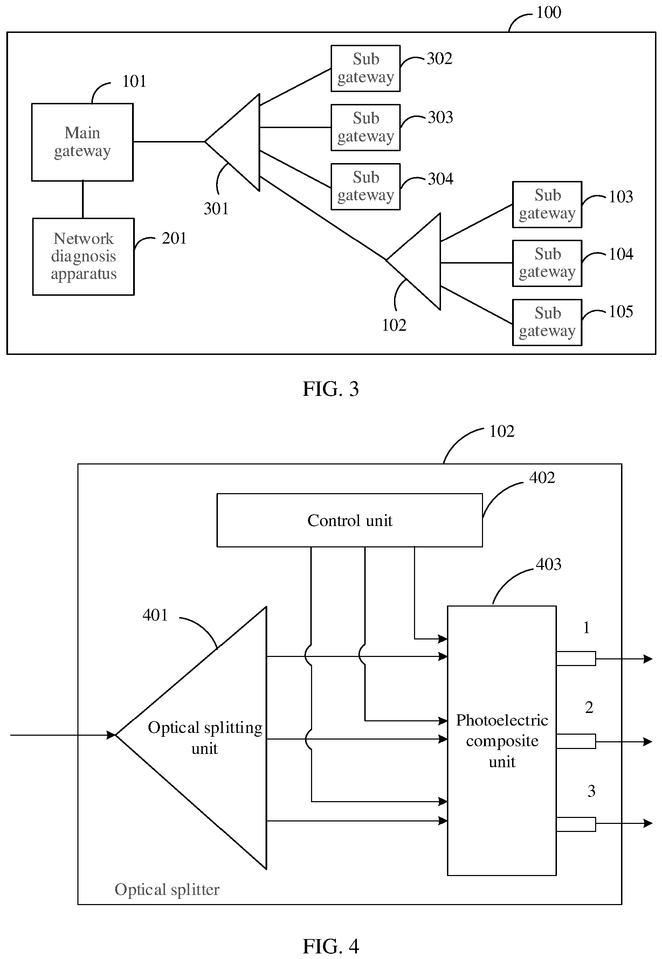

It can be learned from the foregoing descriptions of FIG. 1 that the main gateway 101 is connected to the optical splitter 102 through the optical fiber. During actual application, the optical splitter 102 may be directly connected to the main gateway 101 through the optical fiber, or may be indirectly connected to the main gateway 101 through the optical fiber. For example, another optical splitter is further included between the main gateway 101 and the optical splitter 102. FIG. 3 is a third schematic structural diagram of an optical communication system according to an embodiment of this application. As shown in FIG. 3, based on FIG. 2, the optical communication system 100 further includes an optical splitter 301 and sub gateways 302 to 304. The optical splitter 301 is connected to the main gateway 101 through an optical fiber. The optical splitter 301 is connected to the sub gateways 302 to 304 through photoelectric composite cables. The optical splitter 102 is connected to a cascading port of the optical splitter 301 through an optical fiber.

To improve operation and maintenance efficiency, a topology level of the optical splitter 102 may be determined by using the N first electrical signals. Specifically, the N first electrical signals carry cascading identifiers. The N sub gateways or the another device determines the topology level of the optical splitter 102 based on the cascading identifier. The cascading identifier may be a bit sequence carried in the first electrical signal or the frequency of the first electrical signal. Descriptions are separately provided below.

The cascading identifier may be the bit sequence carried in the first electrical signal. For example, each first electrical signal carries a bit sequence "00". "00" represents that the topology level of the optical splitter 102 is a first level, that is, the optical splitter 102 is directly connected to the main gateway 101. For another example, each first electrical signal carries a bit sequence "01". "01" represents that the topology level of the optical splitter 102 is a second level, that is, another optical splitter is further included between the optical splitter 102 and the main gateway 101. The sub gateway 104 is configured to obtain the bit sequence carried in the first electrical signal. The sub gateway 104 may be further configured to transmit the bit sequence to the another device. The sub gateway 104 or the another device is configured to determine the topology level of the optical splitter 102 based on the bit sequence.

The cascading identifier may be the frequency of the first electrical signal. For example, the N first electrical signals include electrical signals 1 to 3. A frequency range of the electrical signal 1 is from 0 kHz to 400 kHz. A frequency range of the electrical signal 2 is from 0 kHz to 800 kHz. A frequency range of the electrical signal 3 is from 0 kHz to 1200 kHz. In this case, a remainder obtained by dividing an upper frequency limit of the first electrical signal by 100 is 0. The remainder "0" represents that the topology level of the optical splitter 102 is a first level, that is, the optical splitter 102 is directly connected to the main gateway 101. For another example, a frequency range of the electrical signal 1 is from 0 kHz to 450 kHz. A frequency range of the electrical signal 2 is from 0 kHz to 850 kHz. A frequency range of the electrical signal 3 is from 0 kHz to 1250 kHz. In this case, a remainder obtained by dividing an upper frequency limit of the first electrical signal by 100 is 50. The remainder "50" represents that the topology level of the optical splitter 102 is a second level, that is, another optical splitter is further included between the optical splitter 102 and the main gateway 101. The sub gateway 104 is configured to obtain the frequency of the first electrical signal. The sub gateway 104 may be further configured to transmit the frequency of the first electrical signal to the another device. The sub gateway 104 or the another device is configured to determine the topology level of the optical splitter 102 based on the frequency of the first electrical signal.

When the cascading identifier is the frequency of the first electrical signal, the optical splitter 102 may receive a range control signal from the main gateway 101 or the network management device. The optical splitter 102 is configured to transmit, to the N sub gateways based on the range control signal, the N first electrical signals whose frequencies include the cascading identifiers. For example, the range control signal includes a first-level identifier. The optical splitter 102 generates, based on the first-level identifier, a first electrical signal for which a remainder obtained by dividing an upper frequency limit by 100 is 0. For another example, the range control signal includes a second-level identifier. The optical splitter 102 generates, based on the second-level identifier, a first electrical signal for which a remainder obtained by dividing an upper frequency limit by 100 is 50.

It should be understood that the topology level of the optical splitter 102 corresponds to a topology level of the N sub gateways. For example, when the topology level of the optical splitter 102 is the second level, it represents that the topology level of the N sub gateways is also the second level, that is, the N sub gateways are connected to the optical splitter at the second level. Therefore, the N sub gateways or the another device may determine the topology level of the N sub gateways by determining the topology level of the optical splitter 102.

During actual application, the network diagnosis apparatus 201 may be configured to obtain information about the topology level of the N sub gateways from the another device or the N sub gateways. For example, Table 3 is an example of topology information provided in this embodiment of this application. The topology information includes the first correspondence and the information about the topology level of the N sub gateways. The network diagnosis apparatus 201 may be configured to obtain a topology view of the optical communication system 100 by using the topology information. To improve operation and maintenance efficiency, the network diagnosis apparatus 201 may be configured to display the topology information or the topology view.

**Table 3**

| Identifier of a port | Identifier of a sub gateway | Topology level |
|---|---|---|
| Port 1 | Sub gateway 103 | First level |
| Port 2 | Sub gateway 104 | First level |
| Port 3 | Sub gateway 105 | First level |

During actual application, the N first electrical signals may be further used to obtain electrical connection states of the N sub gateways. For example, when the sub gateway 104 does not receive the first electrical signal within agreed time, the sub gateway 104 determines that an electrical connection state between the sub gateway 104 and the main gateway 101 is disconnected. When the sub gateway 104 receives the first electrical signal within agreed time, the sub gateway 104 determines that an electrical connection state between the sub gateway 104 and the main gateway 101 is normal. The sub gateway 104 may be configured to transmit the electrical connection state between the gateway 104 and the main gateway 101 to the another device. The network diagnosis apparatus 201 is configured to receive the electrical connection state between the sub gateway 104 and the main gateway 101 from the sub gateway 104 or the another device. Similarly, the network diagnosis apparatus 201 may obtain N electrical connection states between the N sub gateways and the optical splitter 102. The N electrical connection states are in one-to-one correspondence with the N sub gateways. To improve operation and maintenance efficiency, the network diagnosis apparatus 201 may be further configured to display the N electrical connection states in the topology information or the topology view.

The optical splitter 102 may also be configured to obtain the N electrical connection states. For example, the optical splitter 102 is configured to obtain the N electrical connection states from the network diagnosis apparatus 201. To improve user experience, the optical splitter 102 may be configured to display the N electrical connection states. For example, N light emitting diodes (light emitting diodes, LEDs) lamps are disposed on the optical splitter 102. The N LED lamps are in one-to-one correspondence with the N sub gateways. The optical splitter 102 displays the N electrical connection states by using the N LED lamps. Each LED lamp is configured to display electrical connection state of one sub gateway. The N electrical connection states are in one-to-one correspondence with the N LED lights.

The network diagnosis apparatus 201 may be further configured to obtain N optical connection states between the N sub gateways and the optical splitter 102. The N optical connection states are in one-to-one correspondence with the N sub gateways. The optical connection state represents an optical path connection state between the sub gateway and the optical splitter 102. Manners in which the network diagnosis apparatus 201 obtains the N optical connection states are not limited in embodiments of this application. To improve operation and maintenance efficiency, the network diagnosis apparatus 201 may be further configured to display the N optical connection states in the topology information or the topology view.

It should be understood that FIG. 1 to FIG. 3 are merely several schematic structural diagrams of the optical communication system 100 according to embodiments of this application. During actual application, a person skilled in the art may adaptively modify a structure of the optical communication system 100 based on a requirement. For example, in FIG. 1, the main gateway 101 is connected to the optical splitter 102 through the photoelectric composite cable. The optical splitter 102 may be configured to transmit the electrical signal to the main gateway 101. For another example, in FIG. 3, the optical splitter 102 further includes the cascading port. The cascading port is configured to connect to the another optical splitter.

The foregoing describes the optical communication system provided in embodiments of this application. The following describes the optical splitter 102 provided in embodiments of this application. FIG. 4 is a first schematic structural diagram of an optical splitter according to an embodiment of this application. As shown in FIG. 4, the optical splitter 102 includes an optical splitting unit 401, a control unit 402, and a photoelectric composite unit 403. The following describes functions of each unit in the optical splitter 102.

The optical splitting unit 401 may be a power splitter, a wavelength demultiplexer, or a wavelength selective switch. The optical splitting unit 401 is configured to receive a downlink optical signal from a main gateway, and obtain N downlink optical sub-signals based on the downlink optical signal. For example, the optical splitting unit 401 is configured to perform power splitting on the downlink optical signal to obtain N downlink optical sub-signals. In FIG. 4, N is equal to 3. In a subsequent example, an example in which N is equal to 3 is used for description.

The control unit 402 may be a microcontroller unit (microcontroller unit, MCU), a programmable logic device (programmable logic device, PLD), a complex programmable logic device (complex programmable logic device, CPLD), an application-specific integrated circuit (application-specific integrated circuit, ASIC), a central processing unit (central processing unit, CPU), a network processor (network processor, NP), or the like. The control unit 402 is configured to generate N first electrical signals with different frequencies, and transmit the N first electrical signals to the photoelectric composite unit 403. For example, the control unit 402 includes N I/O ports (Input/Output interfaces). Each I/O port is configured to output one first electrical signal.

The photoelectric composite unit 403 includes N ports (which are respectively a port 1, a port 2, and a port 3). Each port is connected to one sub gateway through a photoelectric composite cable. The photoelectric composite unit 403 is configured to receive the N downlink optical sub-signals from the optical splitting unit 401, and receive the N first electrical signals from the control unit 402. The N downlink optical sub-signals are in one-to-one correspondence with the N first electrical signals. The photoelectric composite unit 403 is configured to perform photoelectric composite on the corresponding first electrical signal and downlink optical sub-signal, and transmit the first electrical signal and the downlink optical sub-signal to the sub gateway through the photoelectric composite cable.

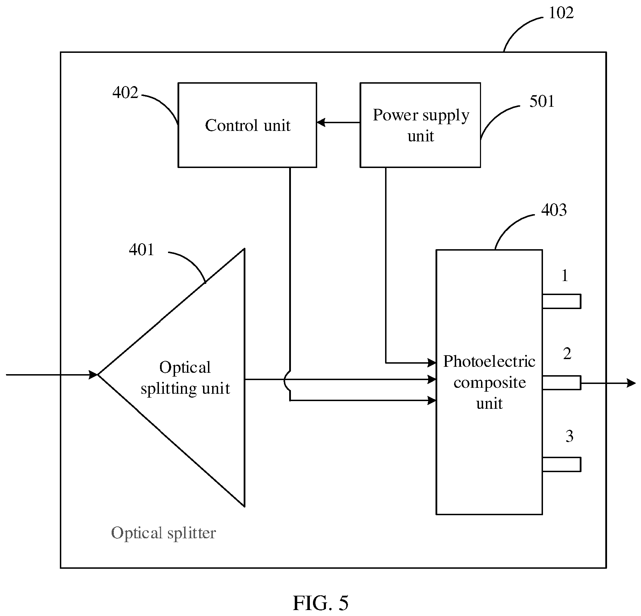

FIG. 5 is a second schematic structural diagram of an optical splitter according to an embodiment of this application. As shown in FIG. 5, based on FIG. 4, the optical splitter further includes a power supply unit 501. The power supply unit 501 is configured to connect to the photoelectric composite unit 403, and supply power to one or more of N sub gateways through the photoelectric composite cable. The power supply unit 501 may be further configured to supply power to the control unit 402. It should be understood that, in FIG. 5 and a subsequent example, for brevity of the accompanying drawings, only that the power supply unit 501 supplies power to one sub gateway is shown. Similarly, in FIG. 5 and the subsequent example, only one of the N first electrical signals and one downlink optical sub-signal corresponding to the first electrical signal are shown.

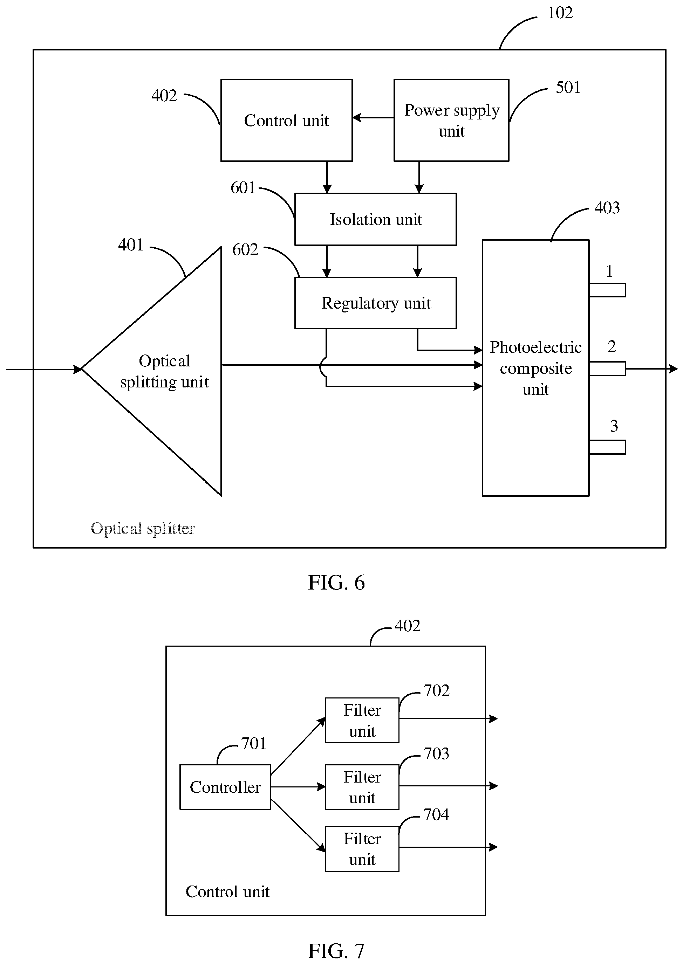

FIG. 6 is a third schematic structural diagram of an optical splitter according to an embodiment of this application. As shown in FIG. 6, based on FIG. 5, the optical splitter further includes an isolation unit 601 and a regulatory unit 602. The isolation unit 601 is configured to isolate the power supply unit 501 from the control unit 402. For example, the isolation unit 601 includes a coupling capacitor and an isolation inductor. The coupling capacitor is configured to isolate a high-voltage signal output by the power supply unit 501, to prevent the high-voltage signal from damaging the control unit 402. The isolation inductor is configured to filter the first electrical signal output by the control unit 402, to prevent the first electrical signal from affecting the power supply unit 502. The regulatory unit 602 is located between the control unit 402 and the photoelectric composite cable. The regulatory unit 602 is configured to prevent a circuit from being overloaded, for example, being struck by lightning. The circuit may be the control unit 402 or the power supply unit 501.

It can be learned from the foregoing descriptions of FIG. 4 that the control unit 402 is configured to output the N first electrical signals with the different frequencies. During actual application, the control unit 402 may directly generate the N first electrical signals with the different frequencies, or may obtain the N first electrical signals with the different frequencies based on N electrical signals. FIG. 7 is a schematic structural diagram of a control unit according to an embodiment of this application. As shown in FIG. 7, the control unit 402 includes a controller 701 and N filter units. The N filter units include filter units 702 to 704. For descriptions of the controller 701, refer to the foregoing descriptions of the control unit 402. For example, the controller 701 may be an MCU. The controller 701 is configured to generate the N electrical signals, and transmit the N electrical signals to the N filter units. The filter unit may also be referred to as an electrical filter. Each filter unit is configured to receive one electrical signal. The N electrical signals are in one-to-one correspondence with the N filter units. Each filter unit is configured to filter one electrical signal to obtain one first electrical signal. The N filter units are configured to filter the N electrical signals to obtain the N first electrical signals with the different frequencies.

The N electrical signals may be electrical signals with a same frequency, or may be a DSM sequence representing different frequencies. Descriptions are separately provided below.

The N electrical signals are electrical signals with the same frequency. For example, frequency ranges of the N electrical signals are all from 0 kHz to 1200 kHz. The N first electrical signals include electrical signals 1 to 3. A frequency range of the electrical signal 1 is from 0 kHz to 400 kHz. A frequency range of the electrical signal 2 is from 0 kHz to 800 kHz. A frequency range of the electrical signal 3 is from 0 kHz to 1200 kHz.

The N electrical signals are the DSM sequence. In the DSM sequence, a sine waveform representing a frequency is represented in a form of binary bits 0 and 1 through oversampling and 1-bit quantization. Using second-order DSM as an example, a sine wave with an input X(z) may be converted into a binary bit sequence with an output Y(z) by using a DSM modulation technology. Densities of 0s and 1s represent amplitudes of the sine wave. For example, a larger density of 1s corresponds to a point with a larger amplitude of the input X(z). A larger density of 0s corresponds to a point with a smaller amplitude of the input X(z). A noise power may be moved out of a signal band based on an oversampling technology and the 1-bit quantization, to increase a signal-to-noise ratio. The optical splitter 102 represents different single-frequency information based on different density patterns of 0 and 1. For example, the controller 701 outputs a digital DSM sequence representing a frequency of 100 kHz through one I/O port. The filter unit converts the digital DSM sequence into a 100 kHz sine wave. The controller 701 outputs N DSM sequences representing different frequencies. The N filter units are configured to filter the N DSM sequences to obtain the N first electrical signals.

It can be learned from the foregoing descriptions of FIG. 2 that the frequency of the first electrical signal may be used as the cascading identifier. The optical splitter 102 may adjust the frequency of the first electrical signal based on a range control signal. The controller 701 or the N filter units 702 may adjust the frequency of the first electrical signal based on the range control signal. Descriptions are separately provided below.

The controller 701 adjusts the frequencies of the N output electrical signals based on the range control signal. For example, the range control signal includes a first-level identifier. The controller 701 generates the N electrical signals based on the first-level identifier. The frequencies of the N electrical signals are from 0 kHz to 1200 kHz. After the N first electrical signals are obtained through filtering by the N filter units 702, frequency ranges of the N first electrical signals are respectively from 0 kHz to 400 kHz, 0 kHz to 800 kHz, and 0 kHz to 1200 kHz. Remainders obtained by dividing lower frequency limits of the N first electrical signals by 100 are 0. The remainder "0" represents that a topology level of the N sub gateways is a first level. For another example, the range control signal includes a second-level identifier. The control unit 402 generates the N electrical signals based on the second-level identifier. Frequency ranges of the N electrical signals are from 50 kHz to 1200 kHz. After the N first electrical signals are obtained through filtering by the N filter units, frequency ranges of the N first electrical signals are respectively from 50 kHz to 400 kHz, 50 kHz to 800 kHz, and 50 kHz to 1200 kHz. Remainders obtained by dividing upper frequency limits of the N first electrical signals by 100 are "50". The remainder "50" represents that a topology level of the N sub gateways is a second level.

The N filter units adjust a filter frequency band based on the range control signal. For example, the range control signal includes a first-level identifier. The N filter units are configured to filter the N electrical signals based on the first-level identifier, to obtain the N first electrical signals. Frequency ranges of the N electrical signals are from 0 kHz to 1200 kHz. Frequency ranges of the N first electrical signals are respectively from 0 kHz to 400 kHz, 0 kHz to 800 kHz, and 0 kHz to 1200 kHz. Remainders obtained by dividing lower frequency limits of the N first electrical signals by 100 are 0. The remainder "0" represents that a topology level of the N sub gateways is a first level. For another example, the range control signal includes a second-level identifier. The N filter units 702 are configured to filter the N electrical signals based on the second-level identifier, to obtain the N first electrical signals. Frequency ranges of the N electrical signals are from 0 kHz to 1200 kHz. Frequency ranges of the N first electrical signals are respectively from 0 kHz to 450 kHz, 0 kHz to 850 kHz, and 0 kHz to 1250 kHz. Remainders obtained by dividing upper frequency limits of the N first electrical signals by 100 are "50". The remainder "50" represents that a topology level of the N sub gateways is a second level.

It can be learned based on the descriptions of FIG. 2 that, the optical splitter 102 may be configured to receive the range control signal from the main gateway 101 or the network management device. During actual application, the optical splitter 102 may include a range control unit. The range control unit may be a rocker switch. Installation personnel may adjust the range control unit to a corresponding range based on a topology level of the optical splitter 102. The range control unit is configured to transmit the range control signal to the control unit 402. The control unit 402 outputs, based on the range control signal, the N first electrical signals whose frequencies include the cascading identifiers.

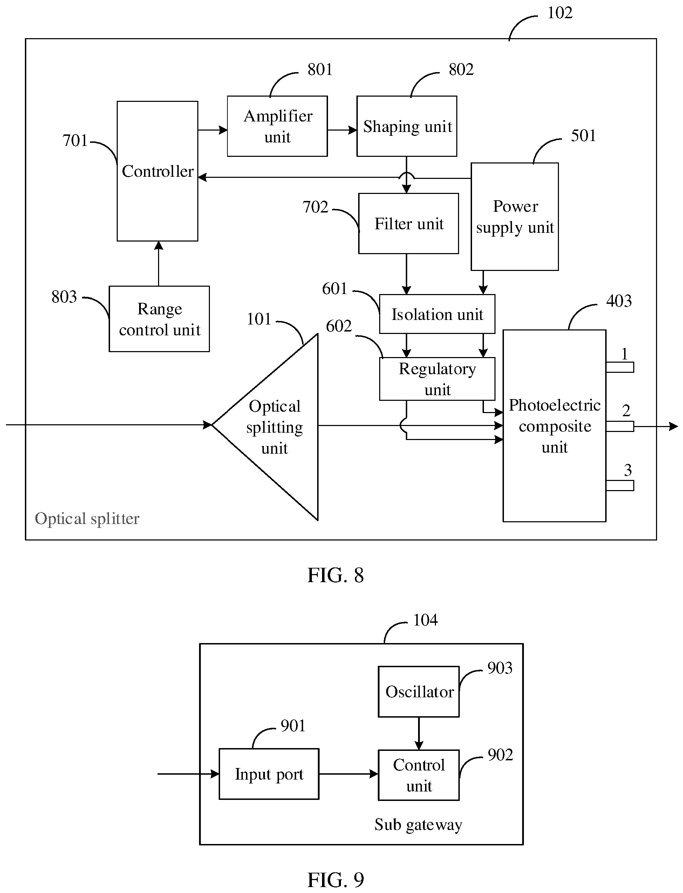

FIG. 8 is a fourth schematic structural diagram of an optical splitter according to an embodiment of this application. As shown in FIG. 8, based on FIG. 6 and FIG. 7, the optical splitter 102 further includes an amplifier unit 801, a shaping unit 802, and a range control unit 803. The range control unit 803 is configured to transmit the range control signal to the controller 701. The controller 701 outputs, based on the range control signal, the N electrical signals whose frequencies include the cascading identifiers. FIG. 8 shows merely one of the N electrical signals. The amplifier unit 801 is configured to amplify the electrical signals output by the controller 701. The shaping unit 802 is configured to shape amplified electrical signals. The filter unit 702 is configured to filter shaped electrical signals to obtain the first electrical signal. For descriptions of another unit in the optical splitter 102, refer to the foregoing descriptions of any one of FIG. 4 to FIG. 7. Details are not described herein again.

It should be understood that FIG. 4 to FIG. 8 are merely several schematic structural diagrams of the optical splitter 102 according to embodiments of this application. During actual application, a person skilled in the art may adaptively modify a structure of the optical splitter 102 based on a requirement. For example, in FIG. 8, the amplifier unit 801 and the shaping unit 802 are located above the filter unit 702. The amplifier unit 801 is configured to perform power amplification on the first electrical signal output by the filter unit 702. The shaping unit 802 is configured to shape an amplified first electrical signal. For another example, in FIG. 4, the optical splitting unit 401 is configured to perform power splitting on the downlink optical signal to obtain four downlink optical sub-signals. The photoelectric composite unit 403 includes three ports and one cascading port. The photoelectric composite unit 403 is configured to output three downlink optical sub-signals through the three ports. The photoelectric composite unit 403 is configured to output one downlink optical sub-signal through the cascading port.

It should be understood that descriptions of the optical splitter 102 are similar to the foregoing descriptions of the optical communication system 100. Therefore, for the descriptions of the optical splitter 102, refer to the foregoing descriptions of any one of FIG. 1 to FIG. 3. For example, the optical splitter 102 is an ODN. For another example, the optical splitter 102 is further configured to receive N uplink optical sub-signals from the N sub gateways in a time division manner. Each uplink optical sub-signal carries one sub-correspondence. The optical splitter 102 is further configured to transmit the N uplink optical sub-signals to the main gateway. The N uplink optical sub-signals carry the first correspondence.

The foregoing describes the optical splitter provided in embodiments of this application. The following uses the sub gateway 104 in the N sub gateways as an example to describe the sub gateway provided in embodiments of this application. For descriptions of another sub gateway, refer to the descriptions of the sub gateway 104.

FIG. 9 is a first schematic structural diagram of a sub gateway according to an embodiment of this application. As shown in FIG. 9, the sub gateway 104 includes an input port 901 and a control unit 902. The input port 901 may be a connection port of a photoelectric composite cable. The input port 901 is connected to one of the N ports of an optical splitter 102 through the photoelectric composite cable. N is an integer greater than 0. The input port 901 is configured to receive a first electrical signal from the optical splitter 102, and transmit the first electrical signal to the control unit 902.

The control unit 902 may be a microcontroller unit (microcontroller unit, MCU), a programmable logic device (programmable logic device, PLD), a complex programmable logic device (complex programmable logic device, CPLD), an application-specific integrated circuit (application-specific integrated circuit, ASIC), a central processing unit (central processing unit, CPU), a network processor (network processor, NP), or the like. The control unit 902 is configured to determine a frequency of the first electrical signal. The frequency of the first electrical signal is used to obtain a sub-correspondence. The sub-correspondence represents that the input port 901 or the sub gateway 104 is connected to a first port of the optical splitter. In the example of Table 1, the first port is the port 2. For descriptions of the frequency of the first electrical signal and the sub-correspondence, refer to the foregoing descriptions of the optical communication system.

During actual application, the sub gateway 104 may further include an oscillator 903. The oscillator 903 is configured to generate an oscillatory electrical signal, and transmit the oscillatory electrical signal to the control unit 902. The control unit 902 is configured to determine the frequency of the first electrical signal based on the oscillatory electrical signal. For example, the oscillator 903 is configured to generate oscillatory electrical signals with different frequencies. The control unit 902 performs correlation operations based on the oscillatory electrical signals with the different frequencies and the first electrical signal. When an operation result obtained by using an oscillatory electrical signal with a frequency 1 exceeds a threshold, the control unit 902 determines that the frequency of the first electrical signal is the frequency 1.

In another embodiment, the sub gateway 104 may further include a memory. The memory may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory is configured to store the frequency of the first electrical signal or the sub-correspondence.

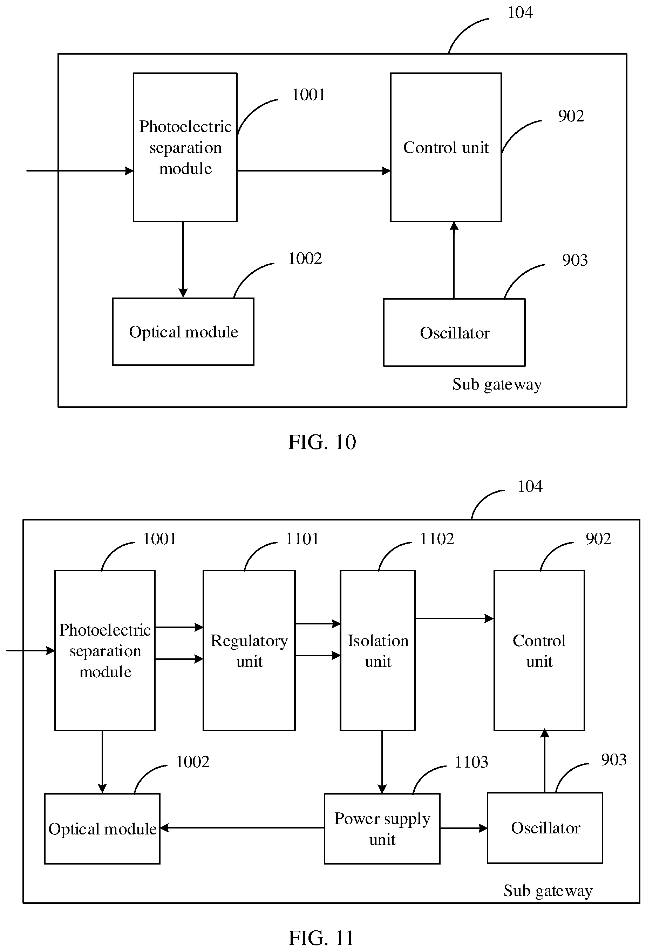

FIG. 10 is a second schematic structural diagram of a sub gateway according to an embodiment of this application. As shown in FIG. 10, based on FIG. 9, the sub gateway 104 further includes a photoelectric separation module 1001 and an optical module 1002. The input port 901 in FIG. 9 is an input port of the photoelectric separation module 1001. The photoelectric separation module 1001 is configured to receive the first electrical signal and a downlink optical sub-signal from the optical splitter 102 through a photoelectric composite cable. The photoelectric separation module 1001 is configured to perform photoelectric separation on the first electrical signal and the downlink optical sub-signal, transmit the first electrical signal to the control unit 902, and transmit the downlink optical sub-signal to the optical module 1002. The optical module 1002 is configured to demodulate the downlink optical sub-signal to obtain an electrical signal carried in the downlink optical sub-signal.

During actual application, the optical module 1002 may be an optical transceiver module. In this case, the optical module 1002 may be further configured to transmit an uplink optical sub-signal (not shown) to the photoelectric separation module 1001. Similarly, the control unit 902 may also be configured to generate a second electrical signal, and transmit the second electrical signal to the photoelectric separation module 1001. The photoelectric separation module 1001 is further configured to perform photoelectric composite on the uplink optical sub-signal and the second electrical signal, and transmit the uplink optical sub-signal and the second electrical signal to the optical splitter 102 through the photoelectric composite cable. The uplink optical sub-signal or the second electrical signal may carry the sub-correspondence.

FIG. 11 is a third schematic structural diagram of a sub gateway according to an embodiment of this application. As shown in FIG. 11, based on FIG. 10, the sub gateway 104 further includes a regulatory unit 1101, an isolation unit 1102, and a power supply unit 1103. The photoelectric separation module 1001 is configured to receive the first electrical signal, the downlink optical sub-signal, and a high-voltage signal from the optical splitter 102 through the photoelectric composite cable. The photoelectric separation module 1001 is configured to perform photoelectric separation on the first electrical signal, the downlink optical sub-signal, and the high-voltage signal, transmit the first electrical signal and the high-voltage signal to the regulatory unit 1101, and transmit the downlink optical sub-signal to the optical module 1002. The regulatory unit 1101 is configured to prevent the control unit 902 from being overloaded, for example, being struck by lightning. The regulatory unit 1101 is configured to transmit the first electrical signal and the high-voltage signal to the isolation unit 1102. The isolation unit 1102 is configured to transmit the high-voltage signal to the power supply unit 1103, and transmit the first electrical signal to the control unit 902. The isolation unit 1102 is configured to isolate the power supply unit 1103 from the control unit 902. The power supply unit 1103 is configured to supply power to the optical module 1002, the oscillator 903, and the control unit 902 based on the high-voltage signal.

It should be understood that FIG. 9 to FIG. 11 are merely several schematic structural diagrams of the sub gateway 104 according to embodiments of this application. During actual application, a person skilled in the art may adaptively modify a structure of the sub gateway 104 based on a requirement. For example, in FIG. 9, the control unit 902 is integrated with the oscillator 903. In this case, the control unit 902 is configured to generate an oscillatory electrical signal, and determine the frequency of the first electrical signal based on the oscillatory electrical signal. For another example, in FIG. 10, the optical module 1002 is further configured to transmit a demodulated electrical signal to the control unit 902. The control unit 902 is configured to perform data processing, such as compression, encryption, decryption, storage, or forwarding, on the demodulated electrical signal.

It should be understood that descriptions of the sub gateway 104 are similar to the foregoing descriptions of the optical communication system 100. Therefore, for the descriptions of the sub gateway 104, refer to the descriptions of any one of FIG. 1 to FIG. 3. For example, the sub gateway 104 is an ONU or an ONT. For another example, the optical splitter 102 is further configured to receive N uplink optical sub-signals from the N sub gateways in a time division manner. Each uplink optical sub-signal carries one sub-correspondence. The optical splitter 102 is further configured to transmit the N uplink optical sub-signals to a main gateway. The N uplink optical sub-signals carry the first correspondence.

In another embodiment, the sub gateway 104 or the optical splitter 102 may further include a memory. The memory may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory is configured to store the frequency of the first electrical signal or the sub-correspondence.

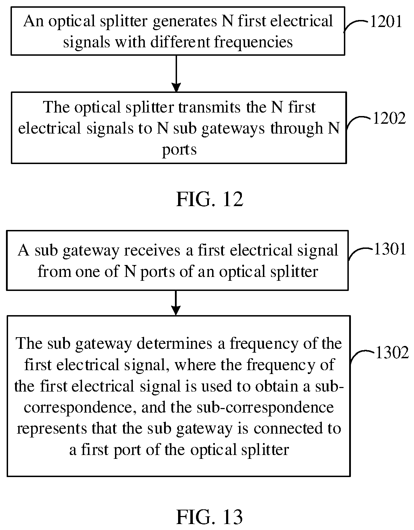

FIG. 12 is a first schematic structural diagram of a detection method according to an embodiment of this application. As shown in FIG. 12, the detection method includes the following steps.

In step 1201, an optical splitter generates N first electrical signals with different frequencies.

The optical splitter includes N ports. N is an integer greater than 0. Each port is connected to one sub gateway through a photoelectric composite cable. The N ports are in one-to-one correspondence with N sub gateways. The N ports are in one-to-one correspondence with the N photoelectric composite cables. The optical splitter generates the N first electrical signals with the different frequencies. For example, the N first electrical signals include an electrical signal 1 and an electrical signal 2. A frequency range of the electrical signal 1 is from 0 kHz to 400 kHz. A frequency range of the electrical signal 2 is from 0 kHz to 800 kHz. For another example, a frequency of the electrical signal 1 is 100 kHz. A frequency of the electrical signal 2 is 200 kHz.

In step 1202, the optical splitter transmits the N first electrical signals to the N sub gateways through the N ports.

The N first electrical signals are in one-to-one correspondence with the N sub gateways. Each sub gateway is configured to receive one first electrical signal. The N first electrical signals with the different frequencies may be used to obtain a first correspondence between the N ports and the N sub gateways. The first correspondence represents a connection relationship between the N sub gateways and the N ports. For example, a port 1 is connected to a sub gateway 103. A port 2 is connected to a sub gateway 104.

It should be understood that descriptions of the detection method are similar to the foregoing descriptions of the optical communication system and the optical splitter. Therefore, for the descriptions of the detection method, refer to the foregoing descriptions of any one of FIG. 1 to FIG. 8. For example, the N first electrical signals are a DSM sequence. For another example, the optical splitter is configured to generate N electrical signals with a same frequency, and filter the N electrical signals to obtain the N first electrical signals with the different frequencies.

FIG. 13 is a second schematic structural diagram of a detection method according to an embodiment of this application. As shown in FIG. 13, the detection method includes the following steps.

In step 1301, a sub gateway receives a first electrical signal from one of N ports of an optical splitter.

The sub gateway is connected to one of the N ports of the optical splitter through a photoelectric composite cable. N is an integer greater than 0. The sub gateway receives the first electrical signal from the optical splitter through the photoelectric optical cable. The sub gateway may further receive a downlink optical sub-signal from the optical splitter through the photoelectric composite cable. The sub gateway may further transmit an uplink optical sub-signal to the optical splitter through the photoelectric composite cable.

In step 1302, the sub gateway determines a frequency of the first electrical signal, where the frequency of the first electrical signal is used to obtain a sub-correspondence, and the sub-correspondence represents that the sub gateway is connected to a first port of the optical splitter.

The frequency of the first electrical signal may be a center frequency, an upper frequency limit, or a lower frequency limit of the first electrical signal. The sub gateway may perform a correlation operation based on an oscillatory electrical signal and the first electrical signal. For example, when an operation result obtained based on the oscillatory electrical signal with a frequency 1 exceeds a threshold, the sub gateway determines that the frequency of the first electrical signal is the frequency 1. The sub gateway may obtain a sub-correspondence based on the frequency of the first electrical signal, or may transmit the frequency of the first electrical signal and an identifier of the sub gateway to another device. The another device may be the optical splitter or a main gateway.

It should be understood that descriptions of the detection method are similar to the descriptions of the optical communication system and the sub gateway. Therefore, for the descriptions of the detection method, refer to the descriptions of any one of FIG. 1 to FIG. 3 or FIG. 9 to FIG. 11. For example, the N first electrical signals are a DSM sequence. For another example, the sub gateway obtains a sub-correspondence based on a second correspondence and the frequency of the first electrical signal. The second correspondence includes a mapping relationship between N frequencies and the N ports.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An optical splitter, comprising an optical splitting unit, a control unit, and a photoelectric composite unit, wherein
the optical splitting unit is configured to receive a downlink optical signal from a main gateway, and transmit N downlink optical sub-signals to the photoelectric composite unit, wherein N is an integer greater than 0;
the control unit is configured to transmit N first electrical signals with different frequencies to the photoelectric composite unit;
the photoelectric composite unit comprises N ports, wherein the N ports are configured to connect to N sub gateways through photoelectric composite cables respectively, and the N sub gateways are in one-to-one correspondence with the N ports; and
the photoelectric composite unit is configured to output the N downlink optical sub-signals through the N ports respectively, and output the N first electrical signals through the N ports respectively, wherein the N ports are in one-to-one correspondence with the N downlink optical sub-signals, and the N ports are in one-to-one correspondence with the N first electrical signals.

2. The optical splitter according to claim 1, wherein the N first electrical signals with the different frequencies are used to obtain a first correspondence between the N ports and the N sub gateways.

3. The optical splitter according to claims 1 or 2, wherein the control unit comprises N filter units and a controller;
the control unit is configured to transmit N electrical signals to the N filter units, wherein the N electrical signals are in one-to-one correspondence with the N filter units; and
the N filter units are configured to filter the N electrical signals to obtain the N first electrical signals with the different frequencies.

4. The optical splitter according to any one of claims 1 to 3, wherein the N first electrical signals carry cascading identifiers, and the cascading identifiers are used to determine a topology level of the N sub gateways.

5. The optical splitter according to claim 4, wherein
the cascading identifiers are frequencies of the N first electrical signals.

6. The optical splitter according to claim 5, wherein the optical splitter further comprises a range control unit;
the range control unit is configured to transmit a range control signal to the control unit; and that the control unit is configured to transmit N first electrical signals with different frequencies to the photoelectric composite unit comprises: the control unit is configured to transmit, to the photoelectric composite unit based on the range control signal, the N first electrical signals whose frequencies comprise the cascading identifiers.

7. The optical splitter according to any one of claims 1 to 6, wherein the optical splitter further comprises an amplifier unit and/or a shaping unit;
the amplifier unit is configured to amplify the N first electrical signals; and
the shaping unit is configured to shape the N first electrical signals.

8. The optical splitter according to any one of claims 1 to 7, wherein the N first electrical signals are obtained based on a δ-Σ modulation DSM sequence.

9. A sub gateway, comprising an input port and a control unit, wherein
the input port is configured to receive a first electrical signal from one of N ports of an optical splitter, and transmit the first electrical signal to the control unit, wherein N is an integer greater than 0; and
the control unit is configured to determine a frequency of the first electrical signal, wherein the frequency of the first electrical signal is used to obtain a sub-correspondence, and the sub-correspondence represents that the input port is connected to a first port of the optical splitter.

10. The sub gateway according to claim 9, wherein
the control unit is further configured to obtain the sub-correspondence based on the frequency of the first electrical signal and a second correspondence, and the second correspondence comprises a mapping relationship between N frequencies and the N ports.

11. The sub gateway according to claims 9 or 10, wherein the first electrical signal carries a cascading identifier, and the cascading identifier is used to determine a topology level of the sub gateway.

12. The sub gateway according to claim 11, wherein
the cascading identifier is the frequency of the first electrical signal.

13. A detection method, comprising:
generating, by an optical splitter, N first electrical signals with different frequencies, wherein N is an integer greater than 0; and
transmitting, by the optical splitter, the N first electrical signals to N sub gateways through N ports respectively, wherein the N ports are in one-to-one correspondence with the N sub gateways, and the N first electrical signals are in one-to-one correspondence with the N sub gateways.

14. The detection method according to claim 13, wherein the N first electrical signals with the different frequencies are used to obtain a first correspondence between the N ports and the N sub gateways.

15. The detection method according to claim 14, wherein the N first electrical signals carry cascading identifiers, and the cascading identifiers are used to determine a topology level of the N sub gateways.

16. The detection method according to claim 15, wherein the method further comprises:
receiving, by the optical splitter, a range control signal; and
the generating, by an optical splitter, N first electrical signals with different frequencies comprises: generating, by the optical splitter based on the range control signal, the N first electrical signals whose frequencies comprise the cascading identifier.

17. The detection method according to any one of claims 13 to 16, wherein the method further comprises:
amplifying, by the optical splitter, the N first electrical signals; and/or shaping, by the optical splitter, the N first electrical signals.

18. A detection method, comprising:
receiving, by a sub gateway, a first electrical signal from one of N ports of an optical splitter, wherein N is an integer greater than 0; and
determining, by the sub gateway, a frequency of the first electrical signal, wherein the frequency of the first electrical signal is used to obtain a sub-correspondence, and the sub-correspondence represents that an input port is connected to a first port of the optical splitter.

19. The detection method according to claim 18, wherein the method further comprises:
obtaining, by the sub gateway, the sub-correspondence based on the frequency of the first electrical signal and a second correspondence, wherein the second correspondence comprises a mapping relationship between N frequencies and the N ports.

20. The detection method according to claims 18 or 19, wherein the method further comprises:
determining, by the sub gateway, a topology level of the sub gateway based on the frequency of the first electrical signal.

21. An optical communication system, comprising a main gateway, an optical splitter, and N sub gateways, wherein N is an integer greater than 0, wherein
the main gateway is connected to the optical splitter through an optical fiber, the optical splitter comprises N ports, the N ports are connected to the N sub gateways through photoelectric composite cables, and the N ports are in one-to-one correspondence with the N sub gateways; and
the optical splitter is configured to transmit N first electrical signals with different frequencies to the N sub gateways through the N ports respectively, wherein the N first electrical signals are in one-to-one correspondence with the N sub gateways.

22. The optical communication system according to claim 21, wherein the N first electrical signals with the different frequencies are used to obtain a first correspondence between the N ports and the N sub gateways.

23. The optical communication system according to claims 21 or 22, wherein the N first electrical signals carry cascading identifiers, and the cascading identifiers are used to determine a topology level of the N sub gateways.

24. The optical communication system according to claim 23, wherein the cascading identifiers are frequencies of the N first electrical signals.

25. The optical communication system according to claim 24, wherein
the optical splitter is further configured to receive a range control signal; and
that the optical splitter is configured to transmit N first electrical signals with different frequencies to the N sub gateways through the N ports respectively comprises: the optical splitter is configured to transmit, based on the range control signal, the N first electrical signals whose frequencies comprise the cascading identifier to the N sub gateways.
